# EUROPÄISCHE PATENTSCHRIFT

(11) **EP 0 482 579 B1**
(45) Veröffentlichungstag und Bekanntmachung des Hinweises auf die Patenterteilung: **08.01.1997**
(21) Anmeldenummer: 91117991.9
(22) Anmeldetag: 22.10.1991
(51) Int. Cl.: B29B 7/60, B29B 7/74

(54) **Verfahren und Vorrichtung zum Dosieren eines insbesondere hochviskosen Ein- oder Mehrkomponentengemisches**
Method and device for proportioning in particular a high viscous mixture with one or more components
Procédé et dispositif pour proportioner en particulier un mélange très visqueux comportant un ou plusieurs componants

(30) Priorität: 22.10.1990 DE 9014625 U
(43) Veröffentlichungstag der Anmeldung: 29.04.1992
(73) Patentinhaber: Reinhardt-Technik GmbH & Co., D-58566 Kierspe (DE)
(72) Erfinder: Klimke, Ralf, W-5990 Altena (DE); Stenzel, Frank, 5883 Kierspe 3 (DE)
(74) Vertreter: Münich, Wilhelm, Dr.

(56) Entgegenhaltungen:
- EP-A- 0 120 419
- EP-A- 0 206 073
- EP-A- 0 225 604
- EP-A- 0 330 032
- DE-A- 2 613 771
- DE-A- 3 542 767
- US-A- 4 090 695
- PATENT ABSTRACTS OF JAPAN vol. 5, no. 206 (M-104)(878) 26. Dezember 1981 & JP-A-56 123 850 (NIIGATA)

## Beschreibung

Die Erfindung bezieht sich gemäß den Oberbegriffen der Patentansprüche 1 und 2 auf ein Verfahren und eine Vorrichtung zum Dosieren eines insbesondere hochviskosen Einoder Mehrkomponentengemisches, mit wenigstens einer Kolben/Zylinder-Einheit für jede Komponente, in die eine Fördereinheit die jeweilige Komponente fördert, und deren Kolben von einer Druckquelle beaufschlagt ist.

In den Oberbegriffen der Patentansprüche 1 und 2 wird von einem gattungsbildenden Stand der Technik ausgegangen, wie er in der EP-A 225 604 beschrieben wird. In diesem Dokument wird eine Vorrichtung zum Zuführen und zur Aufzeichnung flüssiger Komponenten und insbesondere reaktiver chemischer Komponenten zu einem Hochdruckmischkopf beschrieben.

In der EP-A 225 604 sind insbesondere Mittel vorgesehen, die die Bewegungsgeschwindigkeit der Kolbeneinheit erfaßt. Dieses geschieht allerdings, um die Fließraten der verwendeten Komponenten an die verwendeten Servoventile anzupassen.

Aus der EP-A 225 604 ist allerdings kein Verfahren zum Dosieren eines insbesondere hochviskosen Ein- oder Mehrkomponentengemisches zu entnehmen, bei dem zum Ausgleich der entstehenden Druckschwankungen ein Druckregelkreis vorgesehen ist, der wenigstens einen Drucksensor und wenigstens ein Proportionalventil aufweist. Ferner ist aus diesem Dokument auch keine Vorrichtung zum Dosieren eines Gemisches zu entnehmen, wobei den Druck im dosierten Ein- oder Mehrkomponentengemisches wenigstens ein zweiter Sensor erfaßt, dessen Ausgangssignal an eine Steuereinheit angelegt ist, die den Öffnungszustand wenigstens eines Ventils derart steuert, daß der Druck zumindestens annähernd konstant ist.

Die DE-A 26 13 771 offenbart ein Verfahren und eine Vorrichtung zum Dosieren von flüssigen Kunststoffkomponenten. Die dazu verwendete Steuereinrichtung regelt den Druck im Arbeitszylinder durch entsprechende Umschaltung eines Hauptventils. Die Umschaltung kann dabei entweder druckbeaufschlagt oder drucklos den Arbeitszylinder betätigen.

Eine feingesteuerte Druckbeaufschlagung des Arbeitszylinders ist demzufolge nicht möglich. In der DE-A 26 13 771 wird keine Sensoreinheit offenbart. Es ist ferner kein Druckregelkreis vorgesehen, der wenigstens ein Proportionalventil und einen Drucksensor aufweist.

Verfahren und Vorrichtungen zum Dosieren von Ein- oder Mehrkomponentengemischen sind außerdem aus der WO 86/04264 bekannt und werden beispielsweise von der Reinhardt Technik GmbH & Co., Kierspe unter der Bezeichnung Twin-Standard oder Twin-Tandem hergestellt und vertrieben. Auf die genannte Patentveröffentlichung und die Ausbildung der bekannten Vorrichtungen zum Dosieren eines Ein- oder Mehrkomponentengemisches wird im übrigen bezüglich aller hier nicht näher erläuterten Einzelheiten ausdrücklich Bezug genommen.

Vorrichtungen wie diejenigen, die in der WO 86/04264 beschrieben sind, werden beispielsweise in der Automobilindustrie zum Auftragen von sogenannten Klebstoff-Raupen verwendet, mit denen beispielsweise Karosserieteile abgedichtet und/oder miteinander verklebt werden. Insbesondere dann, wenn der Dispenser, d.h. die Austrageinheit von einem Industrieroboter geführt wird, ist es erforderlich, während einer bestimmten Verfahrstrecke der Roboterhand eine genau vorgegebene Materialmenge auszutragen, um eine gleichmäßige Material-Raupe zu erhalten.

Dabei stellt sich das zusätzliche Problem, daß die Bahngeschwindigkeit der "Roboterhand" beispielsweise eines Knickarm-Roboters von der Raumlage und der Form der Bahn abhängen kann.

Bei bekannten Vorrichtungen zum Dosieren von Ein- oder Mehrkomponentengemischen gemäß dem Oberbegriff des Anspruchs 2 wird der bzw. die Kolben der Kolben/Zylinder-Einheit(en) von der Druckquelle mit einem konstanten Druck beaufschlagt. Die pro Zeiteinheit ausgetragene Materialmenge hängt jedoch von der Viskosität des Materials ab, die insbesondere eine Funktion der Umgebungstemperatur ist, so daß sich beispielsweise bei schwankender Umgebungstemperatur ein ungleichmäßiger Materialaustrag ergibt.

Deshalb ist in der DE-OS 39 12 920 vorgeschlagen worden, Druck- und/oder Temperatursensoren vorzusehen, deren Ausgangssignal an einer Steuereinheit angelegt ist, die das jeweilige Förderorgan, also beispielsweise eine Kolben/ Zylinder-Einheit steuert, um einen bestimmten Materialabgabedruck zu erhalten.

Diese Ausbildung hat jedoch nicht nur den Nachteil, daß sie einen vergleichsweise komplizierten Aufbau erfordert, sondern auch den Nachteil, daß die Steuerung der ausgetragenen Materialmenge entsprechend der Temperatur letztlich nach Erfahrungswerten erfolgt und damit mit einem gewissen Fehler behaftet ist.

Der Erfindung liegt die Aufgabe zugrunde, ein Verfahren bzw. eine Vorrichtung zum Dosieren eines insbesondere hochviskosen Ein- oder Mehrkomponentengemisches anzugeben, die so ausgebildet sind, daß die pro Zeiteinheit ausgetragene, d.h. abgegebene Materialmenge exakt geregelt werden kann.

Ein diese Aufgabe lösendes erfindungsgemäßes Verfahren ist im Anspruch 1 gekennzeichnet. Eine entsprechende Vorrichtung ist im Anspruch 2 angegeben. Weiterbildungen der erfindungsgemäßen Vorrichtung sind Gegenstand der weiteren Ansprüche.

Eine Lösung der erfindungsgemäß gestellten Aufgabe wird durch die kennzeichnenden Merkmale der Ansprüche 1 und 2 erreicht.

Zum Regeln der pro Zeiteinheit ausgetragenen Materialmenge wird die Vorschubgeschwindigkeit mindestens eines Kolbens der als Dosier-einheit(en) für die einzelnen Komponenten dienenden Kolben/Zylinder-Einheit(en) erfaßt wird.

Das pro Zeiteinheit ausgetragene Materialvolumen ist nämlich proportional zu der Vorschubgeschwindigkeit des Kolbens. Die Vorschubgeschwindigkeit und damit das Ausstoßvolumen läßt sich beispielsweise über ein hydraulisches Servoventil in dem Druckmedium-Kreis der Druckqelle, die den Kolben beaufschlagt, sehr genau regeln. Selbstverständlich sind aber auch andere Steuerungen der Druckquelle im Rahmen der vorliegenden Erfindung möglich.

Die Erfassung der Bewegung eines einzigen Kolbens ist dabei insbesondere dann ausreichend, wenn die einzelnen Kolbenstangen über einen Balken oder dgl. verbunden sind und von einer einzigen Druckquelle angetrieben werden, wie dies beispielsweise in der WO 86/04264 beschrieben ist.

Die alleinige Regelung der Vorschubgeschwindigkeit des Kolbens erfüllt ihre Funktion jedoch nur dann einigermaßen zufriedenstellend, wenn sich die Auftragsdüse direkt an den zur Dosierung dienenden Kolben/Zylinder-Einheiten befindet.

Dies ist jedoch in der Regel nicht der Fall. Insbesondere dann, wenn der Dispenser bzw. die Austrageinheit von einem Industrieroboter geführt wird, der in der Regel nur ein begrenztes Gewicht tragen kann, werden stationäre Kolben/Zylinder-Einheiten verwendet, die mit der Austrageinheit über einen mehr oder weniger langen Schlauch verbunden sind.

Sobald sich zwischen dem Dosierzylinder und der Auftragdüse ein derartiger Schlauch befindet (Anspruch 19), wird die Mengenregelung sehr träge, weil sich erst der Druck im System auf die geänderten Durchflußvolumina einstellen muß. Bei 2K-Produkten verändern sich die Drücke in den jeweiligen Komponenten nicht gleichmäßig, so daß sich Dosierfehler ergeben.

Um diese insbesondere durch die Regelung der Verschiebungsgeschwindigkeit entstehenden Druckschwankungen, die Dosierfehler hervorrufen, zu beseitigen und eine schnelle und genaue Mengenregelung zu erreichen, wird an der Auftragdüse bzw. Austrageinheit (wenigstens) ein Ventil und insbesondere ein Proportionalventil (Anspruch 6) in den Materialstrom eingebaut. Beispielsweise ist es möglich, mehrere parallel geschaltete Ventile vorzusehen, die getrennt geöffnet und geschlossen werden. Besonders bevorzugt ist jedoch die Verwendung mindestens eines Proportionalventils. Durch Einstellen des Öffnungszustandes dieses Ventils bzw. dieser Ventile und insbesondere durch Verstellen der Fläche der Durchtrittsöffnung des Proportionalventils wird der Druck im System auf einen (annähernd) konstanten Wert gehalten. Die Verwendung eines Proportionalventils hat dabei den zusätzlichen Vorteil, daß sich eine sehr gleichmäßige Verstellung ergibt.

Anders ausgedrückt, wird bei der erfindungsgemäßen Vorrichtung zum Austragen bzw. Dosieren einer bestimmten, vorgegebenen Materialmenge die Verschiebegeschwindigkeit des Hydraulikkolbens entsprechend den Vorgaben, die sich beispielsweise aus der zu durchfahrenden Bahn und der jeweiligen Bahngeschwindigkeit der Austrageinheit ergeben, verändert:

Beim Verringern der Ausstoßmenge fährt der Hydraulikkolben langsamer, der Druck im System fällt ab. Ein Drucksensor erfaßt den Druckabfall und über eine Regelung wird die Querschnittsfläche des Proportionalventiles soweit verkleinert, bis sich der Solldruck wieder einstellt. Beim Erhöhen der Ausstoßmenge fährt der Hydraulikkolben schneller, der Druck erhöht sich. Die Druckkonstantregelung öffnet die Querschnittfläche des Proportionalventiles bis der Solldruck erreicht ist.

Um zu verhindern, daß die Ausstoßmenge aufgrund beispielsweise Temperatur-bedingter Viskositätsänderungen schwankt, wird über die Druckkonstantregelung sofort die Druckerhöhung im System, die sich bei einer Viskositätserhöhung des Materials ergeben würde, durch eine Veränderung des Öffnungsquerschnittes des Proportionalventiles ausgeglichen. Insbesondere bei kontinuierlich arbeitenden Vorrichtungen, wie der Vorrichtung "Twin-Tandem" der Reinhardt Technik GmbH & Co., bei denen zudem die Kolbenstangen der für das Dosieren der einzelnen Komponenten vorgesehenen Kolben/Zylinder-Einheiten über ein "Joch" verbunden sind, ist die Verschiebungsgeschwindigkeit der Kolben der Kolben/Zylinder-Einheiten nämlich streng proportional der ausgetragenen Materialmenge.

Die erfindungsgemäße Ausbildung hat darüberhinaus den Vorteil, daß es problemlos möglich ist, die pro Zeiteinheit ausgetragene Materialmenge beispielsweise an unterschiedliche Verfahrgeschwindigkeiten des die Austrageinheit positionierenden Industrieroboters anzupassen; derartige unterschiedliche Verfahrgeschwindigkeiten können - wie bereits erwähnt - beispielsweise beim Nachfahren einer Kurvenbahn mittels eines Industrieroboters auftreten.

Als erste Sensoren können beispielsweise Wegsensoren, deren Ausgangssignal die Steuereinheit nach der Zeit differenziert, oder Geschwindigkeitssensoren verwendet werden (Ansprüche 2 bzw. 3). Die Verwendung eines Wegsensors hat den zusätzlichen Vorteil, daß über ihn die Kolbenstellung erfaßt werden kann, so daß ein sehr genaue Regelung der ausgetragenen Materialmenge möglich ist.

Bevorzugt ist nach Anspruch 5 nur ein Ventil vorgesehen, das in Flußrichtung vor der Auftragdüse bzw. dem Dispenser, aber nach einer Mischeinheit für die einzelnen Komponenten angeordnet ist.

Im Anspruch 7 ist eine besonders einfache Ausbildung eines Proportionalventils für hochviskose Materialien angegeben:

Bekanntermaßen müssen derartige hochviskose Materialien mit einem Förderdruck gefördert werden, der bis zu einigen 100 bar betragen kann. Durch die im Anspruch 7 angegebene Ausbildung, bei der die Anschlußstutzen auf Seitenflächen eines Grundkörpers vorgesehen und durch einen parallel zur Längsachse des Grundkörpers verlaufenden Kanal verbunden sind, kann das Proportionalventil leicht an bestehenden Anlagen nachgerüstet werden. Dem dient auch die Weiterbildung gemäß Anspruch 12.

Die im Anspruch 8 gekennzeichnete Ausbildung, gemäß der der Zapfen in den beiden Stirnwänden des Grundkörpers gelagert ist, ist gerade bei hohen Anlagedrücken von Vorteil. Selbstverständlich ist es aber auch möglich, den Zapfen nur einseitig zu lagern.

Darüberhinaus kann das erfindungsgemäß ausgebildete Proportionalventil auch als Absperrventil verwendet werden:

Hierzu ist gemäß Anspruch 9 der Zapfen so ausgebildet, daß er einen Abschnitt aufweist, dessen Durchmesser gleich oder größer als der Durchmesser der Blende ist, so daß bei einer entsprechenden Verschiebung des Zapfens die Blendenöffnung vollständig verschlossen ist.

In den Ansprüchen 10 und 11 sind Weiterbildungen angegeben, die eine einfache Ansteuerung des erfindungsgemäß verwendeten Proportionalventils ermöglichen.

Durch die im Anspruch 13 angegebene Ausgestaltung ist eine einfache Reinigung des Ventils und insbesondere des Durchgangskanals möglich.

Als Steuer- bzw. Regeleinheit können für jeden Regelkreis beispielsweise getrennte analog arbeitende P, PI, PD oder PID-Regler verwendet werden. Auch ist es möglich, als Druck-Steuereinheit eine mechanische Steuereinheit zu verwenden, die in Art eines Druckminderers ausgebildet ist (Anspruch 15).

Besonders bevorzugt ist es jedoch, als Steuereinheit eine elektronische Steuereinheit und insbesondere eine Mikrocomputer-Steuereinheit zu verwenden, an die die Ausgangssignale beider Sensoren sowie des gegebenenfalls vorgesehenen Temperatursensors angelegt sind (Anspruch 14).

Fener ist es möglich, zusätzlich wenigstens einen Temperatursensor vorzusehen, der die Temperatur der Komponenten oder des Materialgemisches erfaßt, zu der die Viskosität proportional ist (Anspruch 15).

Gemäß Anspruch 16 kann das Ausgangssignal des Temperatursensors an die Steuereinheit angelegt sein, und zusätzlich oder alternativ zur Regelung der Verschiebungsgeschwindigkeit (bevorzugt) oder des Ventils dienen. Das mit Temperatursensoren erhaltene Ergebnis wird dadurch verbessert, daß gemäß Anspruch 18 längs des Materialstromes mehrere Temperatursensoren vorgesehen sind, deren Ausgangssignale zur Ermittlung einer mittleren Temperatur des Materialstromes herangezogen werden.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Figur 1: schematisch eine Vorrichtung, bei der die Erfin dung realisiert ist, und
- Figur 2: ein erfindungsgemäß verwendetes Proportionalventil.

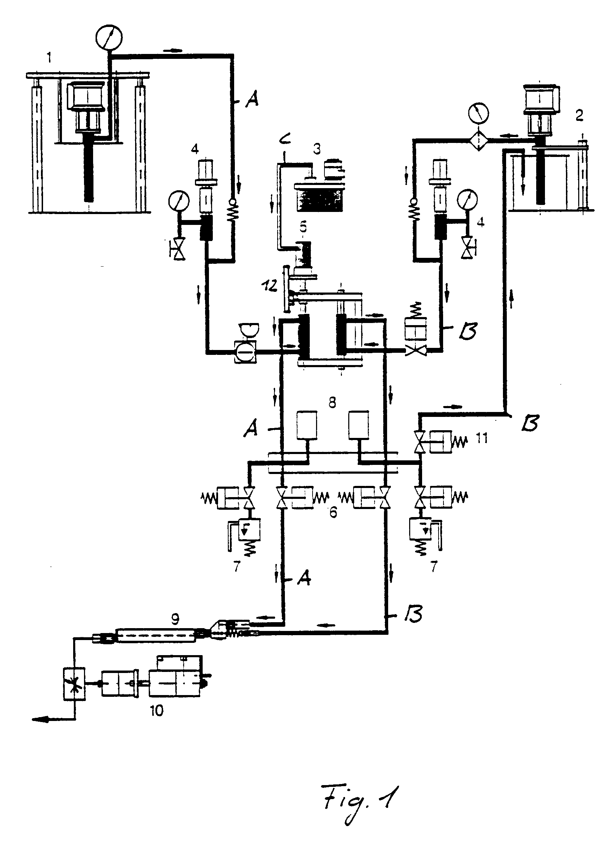

Figur 1 zeigt eine Vorrichtung, die im Grundaufbau der bekannten Vorrichtung "Twin-Standard" der Reinhardt-Technik GmbH & Co. gleicht.

Eine Zuführeinheit 1 fördert eine Komponente A, beispielsweise die Stammkomponente eines Zweikomponenten-Gemisches sowohl in eine Druckerhöhungseinheit 4 als auch in den einen Zylinder einer Dosier- bzw. Austrageinheit dienenden Kolben/Zylinder-Einheit 5. Eine Zuführeinheit 2 fördert die Komponente B des Zweikomponenten-Gemisches, also beispielsweise den Härter, ebenfalls sowohl in eine Druckerhöhungseinheit 4 als auch in den anderen Zylinder der Dosiereinheit 5.

Mit 3 ist ein Hydraulikantrieb für die Dosiereinheit 5 bezeichnet, der ein Hydrauliköl C in einen entsprechenden Antriebszylinder fördert. 6 bezeichnet entsprechende Verteiler-Elemente, die insbesondere geeignete Ventileinheiten sind, 7 eine Dosierkontrolle, 8 Druckaufnehmer für die A- und B-Komponente und 9 eine Misch- und Austrag-einheit, beispielsweise die bekannte Misch- und Austrag-einheit ALPHA-MIX der bereits genannten Reinhardt-Technik GmbH & Co. Mit 11 sind Umlaufventile bezeichnet, die eine Reinigung bzw. eine Rückführung des Härters ermöglichen.

Soweit ist der Grundaufbau bekannt und entspricht der bereits genannten Anlage TWIN-STANDARD, wie sie auch in der WO 86/04264 beschrieben ist.

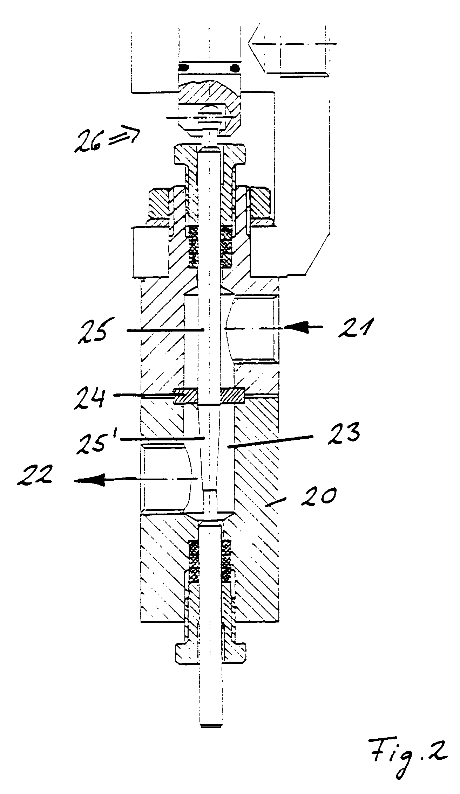

Nach der Misch-und Austrageinheit 9 ist ein Proportionalventil 10 angeordnet, dessen bevorzugter Aufbau in Figur 2 dargestellt ist.

Zusätzlich ist ferner ein Geschwindigkeitssensor 12 vorgesehen, der die Verfahrgeschwindigkeit der Kolben der Dosiereinheit 5 erfaßt.

Die beschriebene Vorrichtung arbeitet wie folgt:

Zum Regeln der pro Zeiteinheit ausgetragenen Materialmenge erfaßt der Geschwindigkeitssensor 12 die Verschiebungsgeschwindigkeit wenigstens eines Kolbens der als Kolben/Zy lindereinheit ausgebildeten Dosiereinheit 5. Das Ausgangssignal des Geschwindigkeitssensors 12 liegt an einer nicht dargestellten Steuereinheit an, die über ein hydraulisches Servoventil, das dem Hydraulikantrieb 3 nachgeschaltet ist, den Druck regelt, der die Kolben der Dosiereinheit 5 beaufschlagt. Damit kann die Geschwindigkeit der Kolben auf einen vorgegebenen Wert geregelt werden.

Die aufgrund der Regelung der Geschwindigkeit auftretenden Druckschwankungen im System werden durch einen Druckregelkreis, der von den Druckaufnehmern 8 und dem Proportionalventil 10 gebildet wird, kurz vor der eigentlichen Auftragsdüse ausgeglichen. Hierzu liegt das Ausgangssignal der Druckaufnehmer 8 an der bereits erwähnten Steuereinheit an, die den Öffnungsquerschnitt des Proportionalventils 10 entsprechend verstellt.

Das Proportionalventil 10 ist dabei im Anschluß an die Misch-und Austrageinheit 9 vorgesehen, so daß es im gemischten Bereich arbeitet. Damit ist bei dem gezeigten Ausführungsbeispiel nur ein Proportionalventil erforderlich.

Figur 2 zeigt ein bevorzugtes Ausführungsbeispiel für das Proportionalventil 10.

Das Proportionalventil weist einen Grundkörper 20 auf, der bevorzugt zweigeteilt ist, und der auf einer Seitenfläche einen ersten Anschlußstutzen 21, der mit der Misch- und Austrageinheit 9 verbindbar ist, und auf der anderen Seitenfläche einen zweiten Anschlußstutzen aufweist, der mit der eigentlichen Auftragsdüse verbindbar ist. Parallel zur Längsachse des Grundkörpers 20 verläuft ein Kanal 23, der die beiden Anschlußstutzen 21 und 22 verbindet, und in den eine Blende 24 eingesetzt ist. Den Kanal 23 und die Blende 24 durchsetzt ein Zapfen 25, der wenigstens einen konischen Abschnitt 25' aufweist, in dem der Durchmesser des Zapfens kleiner als der Durchmesser der Blende 24 ist. Der Zapfen 25 ist bei dem gezeigten Ausführungsbeispiel in den beiden Stirnwänden des Grundkörpers 20 gelagert und weist darüber hinaus zum Absperren des Materialflusses einen Abschnitt auf, dessen Durchmesser gleich oder größer als der Durchmesser der Blende 24 ist. Ferner ist eine hydraulische oder pneumatische Verschiebeeinheit vorgesehen, die gesteuert von dem Ausgangssignal des Drucksensors 8 den Zapfen 25 verschiebt. Diese hydraulische Verschiebeeinheit ist in Figur 2 nicht näher dargestellt und lediglich pauschal mit dem Bezugszeichen 26 versehen. Durch die Teilbarkeit des Grundkörpers 20 im Bereich der Blende 24 kann das erfindungsgemäß ausgebildete Proportionalventil leicht gereinigt werden.

Vorstehend ist die Erfindung anhand eines Ausführungsbeispieles ohne Beschränkung des allgemeinen Erfindungsgedankens beschrieben worden: Insbesondere kann es gegebenenfalls auch möglich sein, vor der Misch- und Austrageinheit 9 in jedem Materialfluß ein Proportionalventil vorzusehen. In diesem Falle ist jedoch der technische Aufwand wesentlich größer als bei der bevorzugten Ausgestaltung, bei der ein Proportionalventil im gemischten Materialfluß vorgesehen ist. Auch ist die Ausgestaltung der nicht dargestellten Steuereinheit bzw. der für die einzelnen Regelkreise getrennt vorgesehenen Steuereinheiten weitgehend beliebig. Weiterhin ist es möglich, zusätzlich einen oder mehrere Temperatursensoren vorzusehen.

## Patentansprüche

1. Verfahren zum Dosieren eines insbesondere hochviskosen Ein- oder Mehrkomponentengemisches, bei dem für jede Komponente wenigstens eine Kolben/Zylinder-Einheit verwendet wird, in die eine Förderpumpe die jeweilige Komponente fördert, und deren Kolben von einer Druckquelle beaufschlagt wird,
wobei zum Regeln der pro Zeiteinheit mittels der Kolben/Zylinder-Einheit ausgetragenen Materialmenge die Verschiebungsgeschwindigkeit wenigstens eines Kolbens der Kolben/Zylinder-Einheit über wenigstens einen Sensor erfaßt und auf einen vorgebbaren Wert geregelt wird,
dadurch **gekennzeichnet,** daß zum Ausgleich der entstehenden Druckschwankungen ein Druckregelkreis vorgesehen ist, der wenigstens einen Drucksensor und wenigstens ein Proportionalventil aufweist.

2. Vorrichtung zum Dosieren eines insbesondere hochviskosen Ein- oder Mehrkomponentengemisches mit wenigstens einer Kolben/Zylinder-Einheit (5) als Dosiereinheit für jede Komponente (A,B), in die eine Fördereinheit (1,2) die jeweilige Komponente fördert, und deren Kolben von einer Druckquelle (3) beaufschlagt ist,
wobei die Verschiebung wenigstens eines Kolbens der Kolben/Zylinder-Einheit (5) ein erster Sensor (12) erfaßt, dessen Ausgangssignal an eine Druck-Steuereinheit angelegt ist, die die Druckquelle (3) derart regelt, daß die Verschiebungsgeschwindigkeit des bzw. der Kolben einen vorgebbaren Wert hat,
dadurch **gekennzeichnet**, daß den Druck im dosierten Einoder Mehrkomponentengemisch wenigstens ein zweiter Sensor (Drucksensor 8) erfaßt, dessen Ausgangssignal an eine Steuereinheit angelegt ist, die den Öffnungszustand wenigstens eines Ventils (10) derart steuert, daß der Druck zumindest annähernd konstant ist.

3. Vorrichtung nach Anspruch 2,
dadurch **gekennzeichnet**, daß der erste Sensor (12) ein Wegsensor ist, dessen Ausgangssignal die Steuereinheit nach der Zeit differenziert.

4. Vorrichtung nach Anspruch 2,
dadurch **gekennzeichnet**, daß der erste Sensor (12) ein Geschwindigkeitssensor ist.

5. Vorrichtung nach einem der Ansprüche 2 bis 4,
dadurch **gekennzeichnet**, daß nur ein Ventil (10) vorgesehen ist, das in Flußrichtung vor einer Auftragdüse angeordnet ist.

6. Vorrichtung nach einem der Ansprüche 2 bis 5,
dadurch **gekennzeichnet**, daß das oder die Ventile (10) Proportionalventile sind.

7. Vorrichtung nach Anspruch 6,
dadurch **gekennzeichnet**, daß das Proportionalventil (10) einen Grundkörper (20) aufweist, der auf einer Seitenfläche einen ersten Anschlußstutzen (21) und auf einer anderen Seitenfläche einen zweiten Anschlußstutzen (22), der mit dem Austragsystem verbindbar ist, sowie einen parallel zur Längsachse des Grundkörpers verlaufenden Kanal (23) aufweist, der die beiden Anschlußstutzen verbindet, und in den eine Blende (24) eingesetzt ist, die ein Zapfen (25) durchsetzt, der wenigstens einen konischen Abschnitt (25') aufweist, in dem der Durchmesser des Zapfens kleiner als der Durchmesser der Blende ist.

8. Vorrichtung nach Anspruch 7,
dadurch **gekennzeichnet**, daß der Zapfen (25) in den beiden Stirnwänden des Grundkörpers (20) gelagert ist.

9. Vorrichtung nach Anspruch 7 oder 8,
dadurch **gekennzeichnet**, daß der Zapfen (25) zum Absperren des Materialflusses einen Abschnitt aufweist, dessen Durchmesser gleich oder größer als der Durchmesser der Blende (24) ist.

10. Vorrichtung nach einem der Ansprüche 7 bis 9,
dadurch **gekennzeichnet**, daß eine hydraulische oder pneumatische Verschiebeeinheit den Zapfen (25) verschiebt.

11. Vorrichtung nach Anspruch 10,
dadurch **gekennzeichnet**, daß die Verschiebeeinheit ein spannungs- oder stromproportionales Verstellelement aufweist.

12. Vorrichtung nach einem der Ansprüche 7 bis 11,
dadurch **gekennzeichnet**, daß die Stutzen Schraubanschlüsse aufweisen.

13. Vorrichtung nach einem der Ansprüche 7 bis 12,
dadurch **gekennzeichnet**, daß der Grundkörper (20) im Bereich der Blende (24) teilbar ist.

14. Vorrichtung nach einem der Ansprüche 2 bis 13,
dadurch **gekennzeichnet**, daß die Ausgangssignale beider Sensoren an eine elektronische Steuereinheit angelegt sind.

15. Vorrichtung nach einem der Ansprüche 2 bis 13,
dadurch **gekennzeichnet**, daß die Druck-Steuereinheit eine mechanische Steuereinheit ist.

16. Vorrichtung nach einem der Ansprüche 2 bis 15,
dadurch **gekennzeichnet**, daß wenigstens ein Temperatursensor vorgesehen ist, der die Temperatur der Komponenten oder des Materialgemisches erfaßt.

17. Vorrichtung nach Anspruch 16,
dadurch **gekennzeichnet**, daß das Ausgangssignal des Temperatursensors an die Steuereinheit angelegt ist, und zusätzlich oder alternativ zur Regelung der Verschiebungsgeschwindigkeit oder des Ventils dient.

18. Vorrichtung nach Anspruch 16 oder 17,
dadurch **gekennzeichnet**, daß längs des Materialstromes mehrere Temperatursensoren vorgesehen sind, deren Ausgangssignale zur Ermittlung einer mittleren Temperatur herangezogen werden.

19. Vorrichtung nach einem der Ansprüche 2 bis 18,
dadurch **gekennzeichnet**, daß die als Austrageinheiten dienenden Kolben/Zylinder-Einheiten in an sich bekannter Weise stationär angeordnet und über einen Schlauch mit dem Ventil und dem nachgeordneten Dispenser verbunden sind.

## Claims

1. Method of dosing a mixture, specifically a highly viscous mixture, which contains one or several components, wherein at least one piston/cylinder unit is provided for each component, in which unit a supply pump delivers the respective component and whose piston is exposed to the action of a pressure source,
wherein the displacement rate of at least one piston of said piston/cylinder unit is detected by means of a sensor and controlled to a value which may be predetermined, so as to control the amount of material distributed by means of said piston/cylinder unit per unit time,
**characterized** in that a pressure control circuit is provided to compensate pressure variations so created, which circuit comprises at least one pressure sensor and at least one proportional valve.

2. Device for dosing a mixture, specifically a highly viscous mixture, containing one or several components, comprising at least one piston/cylinder unit (5) as means for dosing each component (A, B), wherein a supply unit (1, 2) delivers the respective component and whose piston is exposed to the action of a pressure source (3),
wherein a first sensor (12) detects the displacement of at least one piston of said piston/cylinder unit and issues an output signal applied to a pressure control unit which controls said pressure source (3) such that the displacement rate of said piston or pistons, respectively, has a predeterminable value,
**characterized** in that at least one second sensor (pressure sensor 8) detects the pressure within said mixture containing one or several components, and issues an output signal which is applied to a control unit which controls the opening state of at least one valve (10) so as to establish an at least roughly constant pressure level.

3. Device according to Claim 2,
**characterized** in that said first sensor (12) is a displacement sensor whose output signal is differentiated as a function of time by said control unit.

4. Device according to Claim 2,
**characterized** in that said first sensor (12) is a speed sensor.

5. Device according to any of Claims 2 to 4,
**characterized** in that a single valve (10) is provided which, seen in the flow direction, is arranged upstream of an applicator nozzle.

6. Device according to any of Claims 2 to 5,
**characterized** in that said valve or valves (10) are proportional valves.

7. Device according to Claim 6,
**characterized** in that said proportional valve (10) comprises a main body (20) provided with a first branching connector (21) on one side surface, and a second branching connector (22) on another side surface, which is adapted for connexion to the distribution system, as well as a passage (23) extending in parallel with the longitudinal axis of said main body and which communicates said branching connectors with each other, and in which main body a gate element (24) with a plug (25) inserted therein is provided which has at least one truncated section (25') where the diameter of said plug is smaller than the diameter of said gate element.

8. Device according to Claim 7,
**characterized** in that said plug (25) is disposed in the two faces of said main body (20).

9. Device according to Claim 7 or 8,
**characterized** in that said plug (25) comprises a section for closing the material flow, whose diameter is equal to or greater than the diameter of said gate element (24).

10. Device according to any of Claims 7 to 9,
**characterized** in that a hydraulic or pneumatic displacement unit displaces said plug (25).

11. Device according to Claim 10,
**characterized** in that said displacement unit comprises a setting element proportional to the voltage or the current.

12. Device according to any of Claims 7 to 11,
**characterized** in that said branching connectors comprise threaded fittings.

13. Device according to any of Claims 7 to 12,
**characterized** in that said main body (20) may be subdivided in the region of said gate element (24).

14. Device according to Claim 1,
**characterized** in that the output signals of said sensors are applied to an electronic control unit.

15. Device according to any of Claims 2 to 13,
**characterized** in that said pressure control unit is a mechanical control unit.

16. Device according to any of Claims 2 to 15,
**characterized** in that at least one temperature sensor is provided for detecting the temperature of said components in the mixture of materials.

17. Device according to Claim 16,
**characterized** in that the output signal of said temperature sensor is applied to said control unit, and that it serves moreover, or as an alternative, to control the displacement rate of said valve.

18. Device according to Claim 16 or 17,
**characterized** in that a plurality of temperature sensors is disposed along the material flow, whose output signals are used to detect a mean temperature.

19. Device according to any of Claims 2 to 18,
**characterized** in that said piston/cylinder units, which operate as distributor units, are disposed in a stationary manner known per se, and are connected by means of a flexible tube to a valve and to said distributor.

## Revendications

1. Procédé de doser un mélange, en particulier très visqueux, à un ou plusieurs composants, dans lequel au moins une unité piston/cylindre est prévu pour chaque composant, dans laquelle une pompe d'alimentation refoule le composant respectif et dont le piston est soumis à l'action d'une source de pression,
dans lequel la vitesse de déplacement d'au moins un piston de ladite unité piston/cylindre est détectée moyennant au moins un capteur et réglée à une valeur prédéterminable, afin de régler la quantité de matière, qui est distribuée moyennant ladite unité piston/cylindre par unité de temps,
**caractérisé** en ce qu'un circuit d' asservissement de pression est prévu pour la compensation des variations en pression créées, lequel circuit comprend au moins un capteur de pression et au moins une soupape proportionnelle.

2. Dispositif à doser un mélange, en particulier très visqueux, à un ou plusieurs composants, qui comprend au moins une unité piston/cylindre (5) comme unité de dosage à doser chaque composant (A, B), dans laquelle une unité d'alimentation (1, 2) refoule le composant respectif et dont le piston est soumis à l' action d'une source de pression (3),
dans lequel un premier capteur (12) détecte le déplacement d'au moins un piston de ladite unité piston/cylindre, et dont le signal de sortie est appliqué à une unité de commande de pression, qui règle ladite source de pression (3) de façon que la vitesse de déplacement dudit piston ou respectivement des pistons ait une valeur prédéterminable,
**caractérisé** en ce qu'au moins un deuxième capteur (capteur de pression 8) détecte la pression à l'intérieur dudit mélange à un ou plusieurs composants, dont le signal de sortie est appliqué à une unité de commande qui commande l'état d'ouverture d'au moins une soupape (10) de façon à établir un niveau au moins approximativement constant de la pression.

3. Dispositif selon la revendication 2,
**caractérisé** en ce que ledit premier capteur (12) est un capteur de déplacement, dont le signal de sortie est différencié en fonction du temps par ladite unité de commande.

4. Dispositif selon la revendication 2,
**caractérisé** en ce que ledit premier capteur (12) est un capteur de vitesse.

5. Dispositif selon une quelconque des revendications 2 à 4,
**caractérisé** en ce qu'une seule soupape (10) est prévue qui est disposée en amont d'une filière d'apport, vue en sens d'écoulement.

6. Dispositif selon une quelconque des revendications 2 à 5,
**caractérisé** en ce que ladite soupape ou lesdites soupapes (10) sont des soupapes proportionnelles.

7. Dispositif selon la revendication 6,
**caractérisé** en ce que ladite soupape proportionnelle (10) comprend un corps de base (20) ayant, sur une surface latérale, un premier branchement de raccord (21) et, sur une autre surface latérale, un deuxième branchement de raccord (22), qui est adapté à être raccordé au système de distribution, ainsi qu'un passage (23), qui s'étend en parallèle à l'axe longitudinal dudit corps de base et qui établit la communication entre lesdits branchements de raccord, et dans lequel corps de base est placé un obturateur (24) à un tampon (25) y introduit, qui a au moins un segment tronconique (25') où le diamètre dudit tampon est plus petit que le diamètre dudit obturateur.

8. Dispositif selon la revendication 7,
**caractérisé** en ce que ledit tampon (25) est logé dans les deux fronts dudit corps de base (20).

9. Dispositif selon la revendication 7 ou 8,
**caractérisé** en ce que ledit tampon (25) comprend un segment à obturer le courant de matière, dont le diamètre est égal à ou plus grand que le diamètre dudit obturateur (24).

10. Dispositif selon une quelconque des revendications 7 à 9,
**caractérisé** en ce qu'une unité de déplacement hydraulique ou pneumatique déplace ledit tampon (25).

11. Dispositif selon la revendication 10,
**caractérisé** en ce que ladite unité de déplacement comprend un élément d' ajustage proportionnel à la tension ou au courant.

12. Dispositif selon une quelconque des revendications 7 à 11,
**caractérisé** en ce que lesdits branchements de raccord comprennent des raccords filetés.

13. Dispositif selon une quelconque des revendications 7 à 12,
**caractérisé** en ce que ledit corps de base (20) est divisible dans la zone dudit obturateur (24).

14. Dispositif selon la revendication 1,
**caractérisé** en ce que les signaux de sortie desdits capteurs sont appliqués à une unité de commande électronique.

15. Dispositif selon une quelconque des revendications 2 à 13,
**caractérisé** en ce que ladite unité de commande de pression est une unité de commande mécanique.

16. Dispositif selon une quelconque des revendications 2 à 15,
**caractérisé** en ce qu'au moins un capteur de température est prévu qui détecte la température des composants ou du mélange de matières.

17. Dispositif selon la revendication 16,
**caractérisé** en ce que le signal de sortie du capteur de température est appliqué à ladite unité de commande, et en ce qu'il sert de plus, ou comme alternative, à régler la vitesse de déplacement ou de ladite soupape.

18. Dispositif selon la revendication 16 ou 17,
**caractérisé** en ce qu'une pluralité de capteurs de température est disposée le long du courant de matière, dont les signaux de sortie sont utilisés à détecter une température moyenne.

19. Dispositif selon une quelconque des revendications 2 à 18,
**caractérisé** en ce que lesdites unités piston/cylindre, qui font fonction des unités de distribution, sont disposées de façon stationnaire connue en et sont raccordé, moyennant un tuyau, à une soupape et audit distributeur.
